# EUROPEAN PATENT APPLICATION

(11) **EP 3 305 943 A1**
(43) Date of publication of application: **11.04.2018**
(21) Application number: 16192725.6
(22) Date of filing: 07.10.2016
(51) Int. Cl.: C23C 22/83, C09D 5/08, C25D 11/24

(54) **AQUEOUS SOLUTION AND METHOD FOR IMPROVING CORROSION RESISTANCE OF A CR(III) CONVERSION COATING AND MODIFIED CR(III) CONVERSION COATING**

(71) Applicant: Coventya SAS, 92396 Villeneuve-la-Garenne Cedex (FR)
(72) Inventor: YOANNE, Coll, 92110 Clichy (FR); PONS, Marjorie, 95320 Saint-Lieu-La-Forêt (FR)
(74) Representative: Pfenning, Meinig & Partner mbB

(57) **Abstract**

This invention relates to an aqueous solution and a method for preparing an organic protective coating on a Cr(III) conversion layer which is localized on (anodized) aluminium (alloy) to enhance corrosion protection. The composition is an aqueous solution which contains water, an organic film forming agent and a corrosion inhibitor, wherein the corrosion inhibitor comprises or consists of at least one 2-aryl-triazole. According to the method of the present invention, the composition is used for post-treating of a Cr(III) conversion layer on (anodized) aluminium (alloy). The invention further provides a modified Cr(III) conversion coating on (anodized) aluminium (alloy), which is producible or produced with the inventive method. The modified Cr(III) conversion coating according to the invention shows excellent corrosion protection, paint adhesion and electrical resistivity.

## Description

This invention relates to an aqueous solution and a method for preparing an organic protective coating on a Cr(III) conversion layer which is localized on (anodized) aluminium (alloy) to enhance corrosion protection. The composition is an aqueous solution which contains water, an organic film forming agent and a corrosion inhibitor, wherein the corrosion inhibitor comprises or consists of at least one 2-aryl-triazole. According to the method of the present invention, the composition is used for post-treating of a Cr(III) conversion layer on (anodized) aluminium (alloy). The invention further provides a modified Cr(III) conversion coating on (anodized) aluminium (alloy), which is producible or produced with the inventive method. The modified Cr(III) conversion coating according to the invention shows excellent corrosion protection, paint adhesion and electrical resistivity.

Chromate based conversion coatings are widely used for the protection of aluminium and aluminium alloys. They act as a protective coating against corrosion and also serve as a base for paint adhesion. Many solutions have already been developed. Nevertheless, these solutions do not always meet the requirements for corrosion protection. This is especially true for corrosion protection of aluminium alloys which are rich in an alloy metal which is sensitive to oxidation (e.g. Cu-rich Al-alloys). Said aluminium alloys are known to be difficult to protect against corrosion due to copper inclusions formed by the copper content. The use of a corrosion inhibitor helps to protect said alloys from pitting corrosion.

The possibility of the corrosion inhibition of an aluminium alloy metal, especially copper, has attracted many researchers. The best organic inhibitors known today to inhibit corrosion of copper as an aluminium alloy metal are the triazole compounds benzotriazole, tolyltriazole and thiazole compounds mercaptobenzothiazole, ben-zothiazole, and dimercaptothiadiazole. Said compounds were found to react with copper ions to give a complex by forming a protective film chemisorbed on the surface. pH of the film-forming solution is considered to be very important factor to obtain a good corrosion protection. It is assumed in the prior art that corrosion protection is maximal if the pH of the treatment solution having the corrosion inhibitor is in the alkaline range.

EP 1 571 238 discloses processes and compositions for producing aluminium surfaces free from chromium(VI) chromate coatings.

EP 1 848 841 discloses a composition and process for preparing chromiumzirconium coatings on metal substrates such as aluminium (alloy) substrates.

WO 2014/044806 discloses an aqueous solution for improving corrosion resistance of a Cr(III) conversion coating on aluminium (alloys) and anodized aluminium (alloys). Said solution has the disadvantage that a buffering agent is required in the solution to avoid precipitation of the solution caused by a drop in pH upon contact with an acidic trivalent chromium conversion coating.

Starting herefrom, it was the object of the present invention to provide an aqueous solution for improving corrosion resistance of a Cr(III) conversion coating on aluminium (alloy) and/or anodized aluminium (alloy) which is less sensitive to pH variation i.e. does not show precipitation upon contact with an acidic trivalent chromium conversion coating.

The object is solved by the Aqueous solution with the features of claim 1, the method according to claim 11 and the modified Cr(III) conversion coating according to claim 15. The dependent claims show advantageous embodiments thereof.

According to the invention, an aqueous solution for improving corrosion resistance of a Cr(III) conversion coating on aluminium (alloy) and/or anodized aluminium (alloy) is provided, comprising
a) a corrosion inhibitor;
b) an organic film forming agent;
c) water;
characterized in that the corrosion inhibitor comprises or consists of at least one 2-aryl-triazole.

The advantage of the inventive aqueous solution is that it is less sensitive to a pH shift when used on an acidic surface i.e. it does not show precipitation upon contact with an acidic trivalent chromium conversion coating. Since no precipitation occurs at the surface of the trivalent chromium conversion coating to be treated, the solution may act more homogeneously and effectively over the whole area of the surface. Therefore, the whole treatment of the surface is more effective. Additionally, the inventive aqueous solution allows the provision of a modified Cr(III) conversion coating on (anodized) aluminium (alloy) having excellent corrosion protection, paint adhesion and electrical resistivity. According to the ISO 9227 corrosion test, a corrosion protection of more than 168 h, in preferred embodiments even more than 216 hours without any pits on aluminium 2024 is achieved.

The inventive solution may be characterized in that the concentration of the at least one 2-aryl-triazole is 0,5 to 50 g/L, preferably 1 to 25 g/L, more preferably 2 to 10 g/L, particularly 3 to 5 g/L, based on the total mass of the solution.

Moreover, the corrosion inhibitor of the inventive solution may further comprise azole-based compounds (e.g. 2-aryl-alkyl-triazole) in addition to the at least one 2-aryl-triazole. Said additional azole-based compounds may further enhance corrosion resistance, especially pitting corrosion resistance. The further azole-based compounds may be present in a concentration of 0.1 to 15 g/L, preferably 0.5 to 10 g/L, more preferably 1 to 7 g/L, particularly 2 to 5 g/L, based on the total mass of the solution.

In a preferred embodiment of the invention, the corrosion inhibitor of the aqueous solution comprises or consists of a mixture of a 2-aryl-triazole with a 2-aryl-alkyl-triazole, preferably a mixture of a 2-aryl-triazole with a 2-aryl-alkyl-triazole selected from the group consisting of 2-aryl-1-alkyl-triazole, 2-aryl-3-alkyl-triazole, 2-aryl-4-alkyl-triazole, 2-aryl-5-alkyl-triazole and mixtures thereof.

The organic film forming agent may be selected from the group consisting of polymers comprising an acrylic group, preferably an acrylic group selected from the group consisting of acrylonitrile, methacrylonitrile, methyl acrylate, methyl methacrylate, acrylate, methacrylate, acrylamide, methacrylamide and combinations thereof. Polymers comprising an acrylic group as the organic film forming agent provoke the formation of a layer with good electrical conductivity and good paint adhesion. Said film forming agent helps to maintain the corrosion inhibitor close to the copper inclusions on the aluminium surface and thus increase its corrosion resistance.

The concentration of the organic film forming agent may be 1 to 100 g/L, preferably 2 to 50 g/L, more preferably 4 to 25 g/L, particularly 8 to 12 g/L, based on the total mass of the solution.

In a preferred embodiment, the aqueous solution further comprises a wetting agent, preferably a siloxane-based wetting agent, more preferably a polyether siloxane copolymer.

The wetting agent provokes that the aspect of the treated substrate and corrosion protection in the area of the edges of the substrate is improved.

The concentration of the wetting agent may be 0,1 to 20 g/L, preferably 0,2 to 10 g/L, more preferably 0,5 to 5 g/L, particularly 1 to 2 g/L, based on the total mass of the solution.

In a preferred embodiment of the invention, the solution does not comprise a compound having at least two hydroxy groups and/or does not comprise a compound having at least one carboxy group.

The pH of the aqueous solution may be pH 4 to 14, preferably pH 6 to 12, more preferably pH 7.5 to 11, particularly pH 8 to 10.

In a preferred embodiment, the aluminium alloy is an aluminium-copper alloy.

According to the invention, a method for providing a modified Cr(III)-conversion coating on aluminium (alloy) and/or anodized aluminium (alloy) having a Cr(III) conversion coating on the surface is provided. The method comprises the step of contacting the Cr(III)- conversion coating with the inventive aqueous solution.

The method may further comprise the step of contacting the Cr(III) conversion coating with an aqueous passivation solution, preferably an aqueous passivation solution comprising at least one 2-aryl-triazole, optionally at least one 2-aryl-triazole in a concentration of 0,5 to 50 g/L, preferably 1 to 25 g/L, more preferably 2 to 10 g/L, particularly 3 to 5 g/L, based on the total mass of the solution.

Before contacting with the inventive aqueous solution and/ before contacting with a passivation solution, at least one of the following steps may be performed in the inventive method:
i) contacting the aluminium, an aluminium alloy, anodized aluminium and/or an anodized aluminium alloy with an aqueous, alkaline cleaning solution;
ii) rinsing a cleaned aluminium, an aluminium alloy, anodized aluminium and/or an anodized aluminium alloy with water, preferably with demineralised water;
iii) contacting the aluminium, an aluminium alloy, anodized aluminium and/or an anodized aluminium alloy with an aqueous deoxidizing solution, preferably for a maximum of 10 min., more preferably for a maximum of 1 min.;
iv) rinsing the aluminium, an aluminium alloy, anodized aluminium and/or an anodized aluminium alloy with water, preferably with demineralised water;
wherein preferably step iv) follows step iii), step iii) follows step ii) and step ii) follows step i).

After contacting with the inventive aqueous solution and/or after contacting with a passivation solution, at least one of the following steps may be performed in the inventive method:
i) rinsing the Cr(III) conversion coating with water, preferably with demineralised water; and
ii) drying the Cr(III) conversion coating;
wherein preferably step ii) is performed last.

According to the invention, a modified Cr(III) conversion coating on aluminium (alloy) and/or anodized aluminium (alloy), producible or produced with the inventive method, is provided. In fact, the Applicant has found that the modified coating comprises at least trace amounts of 2-aryl-triazole and thus distinguishes from Cr(III) conversion coatings known in the prior art.

With reference to the following Figures and Examples, the subject according to the invention is intended to be explained in more detail without wishing to restrict said subject to the special embodiments shown here.

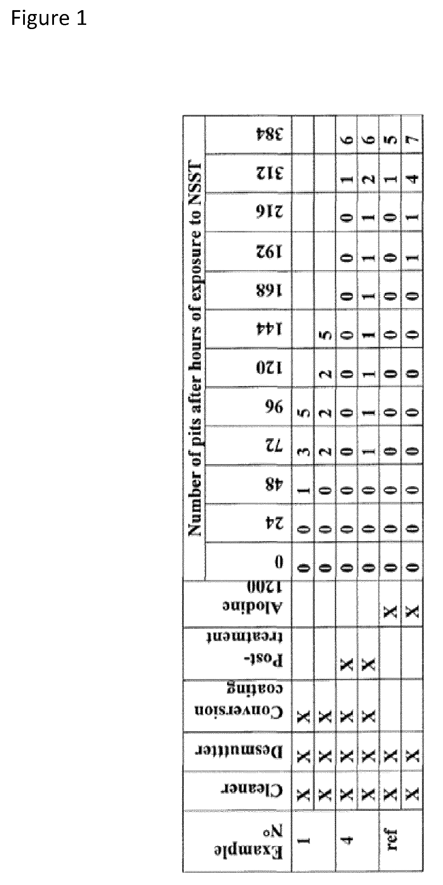

Figure 1 shows the results of the corrosion resistance test (according to ISO 9227) of an aluminium 2024 panel treated with a conventional passivation solution (see recipe in Example 1) and treated or not treated with an inventive post-treatment solution (see recipe in Example 4). Illustrated are the number of pits that appeared after a certain amount of time after exposure to NSST. In addition, the results obtained for a known chromate conversion layer (Alodine 1200 panel) as reference ("ref") is indicated.

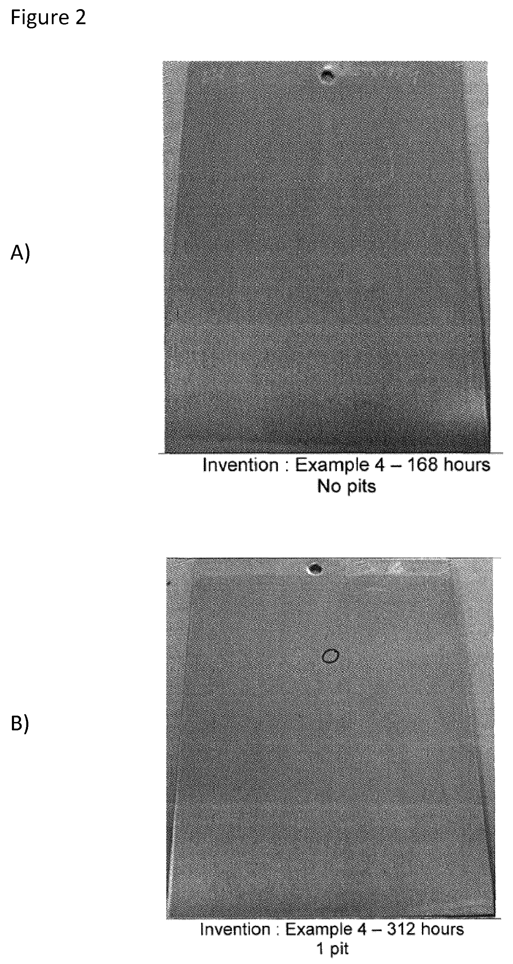

Figure 2 shows the result of the corrosion resistance test (according to ISO 9227) of an aluminium 2024 panel treated with a conventional passivation solution (see recipe in Example 1) and an inventive post-treatment solution (see recipe in Example 4). It can be seen in the pictures of Fig. 2A and Fig. 2B that the first corrosion pit appeared on the panel only after 312 hours.

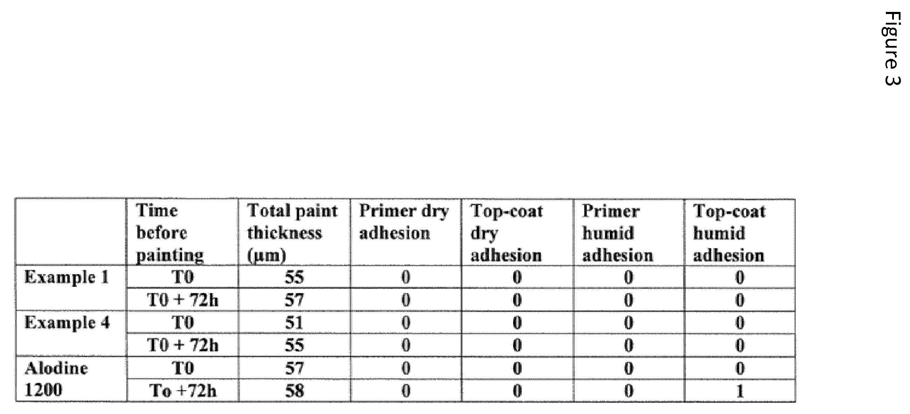

Figure 3 shows the paint adhesion properties of the coatings on an aluminium 2024 panel after having been treated with the conventional passivation solution (see recipe of Example 1), said conventional passivation solution and an inventive post-treatment solution (see recipe of Example 4) and an Alodine 1200 panel as reference. In this experiment, the treated panels were painted with a solvent-based polyurethane primer (PAC 33) and top-coat (PU 66 - 8H) (from PPG AEROSPACE). Ratings, per ASTM 3359, are based on a scale of 0 to 5, with 0 being the best rating.

### Example 1- Production of a conventional and special passivation solution

A conventional passivation solution is produced by mixing 100 ml of Lanthane 613.3 part A and 75 ml of part B (Coventya) with demineralized water to make up one liter of solution. The pH of said solution is adjusted to pH 4 (e.g. using 10% ammonia solution in water).

The special passivation solution is identical to the conventional passivation above with the exception that it comprises 4 g/L of a mixture of azoles. Specifically, the special passivation solution is produced by mixing 100 ml of Lanthane 613.3 part A and 75 ml of part B (Coventya) with 4 g/L of a mixture of azoles and demineralized water to make up one liter of solution. The pH of said solution is adjusted to pH 4 (e.g. using 10% ammonia solution in water).

### Example 2 - Production of a reference post-treatment solution

The reference post-treatment solution is produced by mixing 2 g of mercaptobenzothiazole, 4 g of triethanolamine and 1 g of Mowiol 4-88^{®} with demineralized water to make up one liter of solution. Said solution is stirred until all compounds are dissolved. Then, the pH is adjusted to pH 10.5 (e.g. using 10% H₂SO₄ in water).

### Example 3 - Production of an inventive post-treatment solution without a wetting agent

The inventive post-treatment solution without a wetting agent is produced by mixing 10 g/L (dry content) of an acrylic modified polymer, 4 g/L of a mixture of azoles (2-aryl-triazole and 2-aryl-alkyl-triazole) with demineralized water to make up one liter of solution.

The inventive post-treatment solution is stable for at least 10 weeks. On the contrary, the reference post-treatment solution (according to Example 2) shows precipitation even after 5 days i.e. is less stable.

### Example 4 - Production of an inventive post-treatment solution comprising

### wetting agent

The inventive post-treatment solution comprising a wetting agent is produced by mixing 10 g/L (dry content) of an acrylic modified polymer, 4 g/L of a mixture of azoles (2-aryl-triazole and 2-aryl-aklyl-triazole) and 1,5 g/L of a wetting agent (siloxane based) with demineralized water to make up one liter of solution.

### Example 5 - Method of producing a protective coating over a Cr(III) conversion layer and features of the produced protective coatings

The method comprises the following steps:
1. Clean surface of aluminium, aluminium alloy, anodized aluminium or anodized aluminium alloy with soft alkaline cleaner (LUMIA CLEAN 101; 40 g/L) at 55°C for 10 min;
2. Rinse surface two times with demineralised water;
3. Contact surface with Deoxidizing/Desmutting solution (LUMIA DEOX 411; 20 vol.-%) at room temperature (25 °C) for up to 10 min, preferably up to 1 min;
4. Rinse surface two times with demineralised water;
5. Passivate surface with passivation solution (conventional or special passivation solution; recipe see Example 1) at 40°C for 5 min;
6. Rinse surface two times with demineralised water;
7. Contact surface with post-treatment solution (reference or inventive post-treatment solution; recipes see Examples 2 to 4) for 1 min.;
8. Dry surface at 50°C.

### Features of the produced protective coatings

### I.) Glow Discharge Optical Emission Spectrometry (GDOES) of the protective coatings

Modified Cr(III) conversion coatings were produced with the method of Example 5 and the two different inventive post-treatment solutions mentioned in Examples 3 and 4.

The obtained modified coatings had the following properties:

| | thickness of coating | coating comprising elements |
|---|---|---|
| Example 3: | ca. 70 nm | 50 at.-% O, 40 at.-% C and 5 at.-% S; |
| Example 4: | ca. 80 nm | 50 at.-% O, 40 at.-% C and 5 at.-% S. |

Importantly, both inventive solutions produced a coating having a significant content of carbon and sulfur.

### II.) Corrosion resistance of the protective coatings

Cr(III) conversion coatings produced with the method of Example 5 were exposed to NSST (according to ISO 9227).

In the case that the substrate aluminium 2024 was only treated with the conventional passivation solution (for recipe see Example 1) i.e. was not treated with a post-treatment solution, first pits were appearing even after 96 hours. In other words, it turned out that the addition of a post-treatment solution is necessary to reach at least 168 hours until first pits are appearing. The obtained result is illustrated in Figure 1 which contains a comparison of the number of pits after time for a treatment with the conventional passivation solution of Example 1 compared to a treatment of both the conventional passivation solution of Example 1 and the inventive post-treatment solution of Example 4.

In the case that the aluminium 2024 was treated with the conventional passivation solution (recipe see Example 1) and the first inventive post-treatment solution (recipe see Examples 3), the second inventive post-treatment solution (recipe see Example 4) or the reference post-treatment solution (recipe see Example 2), the observed corrosion resistance was equal (pits appearing after approx. 216 hours; data not shown). Figure 2 illustrates that in the case of a treatment with the solution of Example 4, one first pit appeared only after 312 hours.

However, in the case that the aluminium 2024 was treated with the special passivation solution (recipe see Example 1) and the first inventive post-treatment solution (recipe see Examples 3), the second inventive post-treatment solution (recipe see Example 4) or the reference post-treatment solution (recipe see Example 2), the observed corrosion resistance was equal in all cases, but improved over the treatment with the conventional passivation solution (pits appearing only after approx. 264 hours; data not shown).

This result indicates that 2-aryl-triazole is effective in improving corrosion protection not only when present in the post-treatment solution, but also when present in the passivation solution.

### III.) Aspect of the protective coatings

In the case that the conventional passivation solution (of Example 1) was used together with the reference post-treatment solution (of Example 2), the aspect of the protective coating was observed to be hazy.

On the contrary, in the case that the conventional passivation solution (of Example 1) was used together with an inventive post-treatment solution (of Example 3 or Example 4), the aspect of the protective coating was observed to be homogeneous.

### IV.) Paint adhesion properties of the protective coatings

Aluminium 2024 panels were treated with passivation solution with or without post-treatment solution.

These panels were painted with solvent-based polyurethane primer (PAC 33) and top-coat (PU 66 - 8H) from PPG AEROSPACE.

Aluminum 2024 panels were prepared as usual with an immersion time in the TCP solution of about five minutes. Adhesion of primers to TCP coatings was evaluated against Alodine 1200, a chromate conversion coating, per MIL-DTL-81706.

Ratings, per ASTM 3359, are based on a scale of 0 to 5, with 0 being the best rating. Results of these paint adhesion tests are shown in Figure 3.

### V.) Electrical contact resistance of the protective coatings

The treatment has to allow maintenance of low electrical contact resistance in a corrosive environment. Tests were performed according to MIL DTL 81706 and recorded values are:

| Contact resistance | before NSST | after NSST |
|---|---|---|
| Example 1: | 5 mΩ | 2,3 mΩ |
| Example 5: | 5 mΩ | 4.4 mΩ |
| Alodine 1200 | 19,3 mΩ | 28,5 mΩ |

Electrical resistivity is still below reference.

According to MIL DTL 81706, the electrical resistivity must be < 5mΩ before Neutral Salt Spray Test and < 10 mΩ after Neutral Salt Spray Test. The treatment according to the invention enables to stay within the targeted values.

## Claims

1. Aqueous solution for improving corrosion resistance of a Cr(III) conversion coating on aluminium, an aluminium alloy, anodized aluminium and/or an anodized aluminium alloy, comprising
a) a corrosion inhibitor;
b) an organic film forming agent;
c) water;
**characterized in that** the corrosion inhibitor comprises or consists of at least one 2-aryl-triazole.

2. Aqueous solution according to claim 1, **characterized in that** the concentration of the at least one 2-aryl-triazole is 0,5 to 50 g/L, preferably 1 to 25 g/L, more preferably 2 to 10 g/L, particularly 3 to 5 g/L, based on the total mass of the solution.

3. Aqueous solution according to one of the preceding claims, **characterized in that** the corrosion inhibitor of the aqueous solution comprises or consists of a mixture of a 2-aryl-triazole with a 2-aryl-alkyl-triazole, preferably a mixture of a 2-aryl-triazole with a 2-aryl-alkyl-triazole selected from the group consisting of 2-aryl-1-alkyl-triazole, 2-aryl-3-alkyl-triazole, 2-aryl-4-alkyl-triazole, 2-aryl-5-alkyl-triazole and mixtures thereof.

4. Aqueous solution according to one of the preceding claims, **characterized in that** the organic film forming agent is selected from the group consisting of polymers comprising an acrylic group, preferably an acrylic group selected from the group consisting of acrylonitrile, methacrylonitrile, methyl acrylate, methyl methacrylate, acrylate, methacrylate, acrylamide, methacrylamide and combinations thereof.

5. Aqueous solution according to one of the preceding claims, **characterized in that** the concentration of the organic film forming agent is 1 to 100 g/L, preferably 2 to 50 g/L, more preferably 4 to 25 g/L, particularly 8 to 12 g/L, based on the total mass of the solution.

6. Aqueous solution according to one of the preceding claims, **characterized in that** the aqueous solution further comprises a wetting agent, preferably a siloxane-based wetting agent, more preferably a polyether siloxane copolymer.

7. Aqueous solution according to the preceding claim, **characterized in that** the concentration of the wetting agent is 0,1 to 20 g/L, preferably 0,2 to 10 g/L, more preferably 0,5 to 5 g/L, particularly 1 to 2 g/L, based on the total mass of the solution.

8. Aqueous solution according to one of the preceding claims, **characterized in that** the solution does not comprise a compound having at least two hydroxy groups and/or does not comprise a compound having at least one carboxy group.

9. Aqueous solution according to one of the preceding claims, **characterized in that** the pH of the aqueous solution is pH 4 to 14, preferably pH 6 to 12, more preferably pH 7.5 to 11, particularly pH 8 to 10.

10. Aqueous solution according to one of the preceding claims, **characterized in that** the aluminium alloy is an aluminium-copper alloy.

11. Method for providing a modified Cr(III)-conversion coating on aluminium, an aluminium alloy, anodized aluminium and/or an anodized aluminium alloy having a Cr(III) conversion coating on the surface, wherein the method comprises the step of contacting the Cr(III)- conversion coating with an aqueous solution according to one of claims 1 to 10.

12. Method according to claim 11, further comprising the step of contacting the Cr(III) conversion coating with an aqueous passivation solution, preferably an aqueous passivation solution comprising at least one 2-aryl-triazole, optionally at least one 2-aryl-triazole in a concentration of 0,5 to 50 g/L, preferably 1 to 25 g/L, more preferably 2 to 10 g/L, particularly 3 to 5 g/L, based on the total mass of the solution.

13. Method according to one of claims 11 or 12, **characterized in that** before contacting with an aqueous solution according to one of claims 1 to 10 and/or before contacting with a passivation solution at least one of the following steps is performed:
i) contacting the aluminium, an aluminium alloy, anodized aluminium and/or an anodized aluminium alloy with an aqueous, alkaline cleaning solution;
ii) rinsing a cleaned aluminium, an aluminium alloy, anodized aluminium and/or an anodized aluminium alloy with water, preferably with demineralised water;
iii) contacting the aluminium, an aluminium alloy, anodized aluminium and/or an anodized aluminium alloy with an aqueous deoxidizing solution, preferably for a maximum of 10 min., more preferably for a maximum of 1 min.;
iv) rinsing the aluminium, an aluminium alloy, anodized aluminium and/or an anodized aluminium alloy with water, preferably with demineralised water;
wherein preferably step iv) follows step iii), step iii) follows step ii) and step ii) follows step i).

14. Method according to one of claims 11 to 13, **characterized in that** after contacting with an aqueous solution according to one of claims 1 to 10 and/or after contacting with a passivation solution at least one of the following steps is performed
i) rinsing the Cr(III) conversion coating with water, preferably with demineralised water; and
ii) drying the Cr(III) conversion coating;
wherein preferably step ii) is performed last.

15. Modified Cr(III) conversion coating on aluminium, an aluminium alloy, anodized aluminium and/or an anodized aluminium alloy, producible or produced with the method according to one of claims 11 to 14.
